# EUROPÄISCHE PATENTSCHRIFT

(11) **EP 2 117 862 B1**
(45) Veröffentlichungstag und Bekanntmachung des Hinweises auf die Patenterteilung: **02.11.2011**
(21) Anmeldenummer: 08708977.7
(22) Anmeldetag: 14.02.2008
(51) Int. Cl.: B60J 5/06

(54) **SCHIEBETÜRSYSTEM FÜR EIN KRAFTFAHRZEUG**
SLIDING DOOR SYSTEM FOR A MOTOR VEHICLE
SYSTÈME DE PORTE COULISSANTE POUR UN VÉHICULE

(30) Priorität: 16.02.2007 DE 202007002499 U
(43) Veröffentlichungstag der Anmeldung: 18.11.2009
(73) Patentinhaber: Kabelschlepp GmbH, 57482 Wenden-Gerlingen (DE)
(72) Erfinder: EUL, Werner, 53844 Troisdorf (DE)
(74) Vertreter: Neumann, Ditmar
(86) Internationale Anmeldenummer: PCT/EP2008/051776
(87) Internationale Veröffentlichungsnummer: WO 2008/098981

(56) Entgegenhaltungen:
- EP-A- 1 010 558
- WO-A-2005/090825
- DE-A1- 10 333 834
- JP-A- 10 000 936
- JP-A- 11 093 514
- JP-A- 2003 239 627

## Beschreibung

Der Gegenstand der Erfindung bezieht sich auf ein Schiebetürsystem für ein Fahrzeug, insbesondere ein Kraftfahrzeug.

Kraftfahrzeuge, insbesondere Personenfahrzeuge, bei denen es sich beispielsweise um Vans oder Minivans handelt, haben in der jüngeren Vergangenheit eine große Verbreitung erfahren. Solche Personenfahrzeuge weisen aufgrund ihrer konstruktiven Ausgestaltung wenigstens eine Schiebetür auf, durch die ein leichter Zugang in den Fahrzeuginnenraum ermöglicht wird.

Vans sollen einen vergleichbaren Komfort bieten, wie er aus Personenfahrzeugen bekannt ist. In die Schiebetüren sollen daher Bauteile eingebaut werden, bei denen es sich beispielsweise um elektrisch betätigbare Fensterheber, Beleuchtung, Lautsprecherboxen oder einer Zentralverriegelung handeln kann.

Ein derartiges Schiebetürsystem ist aus der EP 1 010 558 A2 bekannt. Die Schiebetür weist hier in ihrem vorderen, das heißt zur Fahrzeugfront gerichteten, Bereich einen oberen und unteren Haltearm auf, an dem jeweils eine Führungsrolle als Führungselement gelagert ist. Die Führungsrollen sind in einer Führungsschiene an der Fahrzeugkarosserie oberhalb der Türöffnung bzw. unterhalb der Türöffnung verfahrbar. Um die Schiebetür beim Öffnen aus der Türöffnung hinaus und beim Schließen in die Türöffnung hinein zu bewegen sind die Führungsschienen an ihren nach vorne weisenden Enden zum Fahrzeuginneren hin gebogen.

Wie aus der genannten Druckschrift ebenfalls hervorgeht, ist parallel zur unteren Führungsschiene für die am unteren Halter angelagerte Rolle an der zur Türöffnung weisenden Seite eine Rinne mit einer darin geführten Leitungsaufnahmeeinrichtung angeordnet. Die Leitungsaufnahmeeinrichtung ist als Energieführungseinheit aus schwenkbar miteinander verbundenen Kettengliedern gebildet und ist mit ihrem einen Ende mit der Schiebetür und mit ihrem anderen Ende mit einem ortsfesten Teil der Karosserie verbunden. Die Energieführungseinheit weist zwischen ihren beiden Enden einen gebogenen Bereich von miteinander verbundenen Kettengliedern auf.

Die hier benannte Energieführungseinheit dient zur Aufnahme und Führung von Leitungen von einem Anschluss an der Fahrzeugkarosserie zu einem Anschluss am unteren Haltearm der Schiebetür um verschiedene in der Schiebetür angeordnete elektrische Einrichtung wie bereits beschrieben mit elektrischer Energie zu versorgen.

Eine weitere Anordnung eines Schiebetürsystems ist aus der WO 2005/090825 bekannt. Hier sind Führungsschiene und Führungsvorrichtung außen an oder in der Fahrzeugkarosserie in dem Bereich angeordnet, über den die Schiebetür beim Öffnen und Schließen bewegt wird. Der Haltearm für die Schiebetür ist im hinteren, das heißt im Fahrzeugheck gerichteten, Endbereich der Schiebetür angeordnet.

Weiterhin offenbart diese Druckschrift ein Schiebetürsystem bei dem die Leitungsaufnahmeeinrichtung in die Führungsschiene für das Führungselement der Schiebetür integriert ist.

Ferner ist aus der JP 10 000 936 A ein Schiebetürsystem bekannt, bei dem eine bandförmige Aufnahme zur Führung von Leitungen dient.

Die bisher bekannten Schiebetürsysteme weisen einen Unterschied gegenüber den aus Personenkraftwagen bekannten schwenkbaren Türsystemen auf. Bei schwenkbaren Türsystemen werden die elektrischen Leitungen im Wesentlichen durch das Türblech oder das Blech der Säule bzw. des Kotflügels nach außen abgedeckt und sind somit einem Zugriff von außen bei geschlossener Tür oder auch bei geöffneter Tür entzogen.

Der vorliegenden Erfindung liegt die Aufgabe zugrunde, ein Schiebetürsystem bereitzustellen, bei dem die Energieführungsleitung bei geschlossener Tür und optional auch bei geöffneter Tür von außen im Wesentlichen unzugänglich ist.

Diese Aufgabe wird durch ein Schiebetürsystem für ein Fahrzeug insbesondere ein Kraftfahrzeug mit den Merkmalen des Anspruchs 1 gelöst. Vorteilhafte Weiterbildungen und Ausgestaltungen des Schiebetürsystems sind Gegenstand der abhängigen Ansprüche.

Das erfindungsgemäße Schiebetürsystem weist wenigstens eine Schiebetür mit einer an oder in der Fahrzeugkarosserie in der Nähe der Türöffnung anbringbaren Führungsschiene auf und weiterhin ein längs der Führungsschiene verfahrbares Führungselement, das über einen Haltearm mit der Schiebetür verbunden ist und eine Energieführungseinheit, die aus gelenkig miteinander verbundenen Gliedern zur Aufnahme und Führung von wenigstens einer Leitung gebildet ist, die sich von einem ortsfesten Anschluss an einer Fahrzeugkarosserie zu einem Anschlusselement erstreckt. Die Energieführungseinheit ist in Längsrichtung der Führungsschiene beweglich.

Bei dem erfindungsgemäßen Schiebetürsystem ist des Weiteren vorgesehen, dass die Führungsschiene die Energieführungseinheit wenigstens teilweise überlappt. Die Überlappung schützt die in der Energieführungseinheit geführten Leitungen vor einem unerlaubten Zugriff von außerhalb des Fahrzeugs bei geschlossener oder auch bei geöffneter Tür. Die Anordnung der Energieführungseinheit innerhalb des Schiebetürsystems kann weiterhin so ausgeführt sein, dass ein Eintrag von Schmutz- oder Staubpartikeln oder Feuchtigkeit in die Energieführungseinheit und somit eine Korrosion der Energieführungsleitungen verhindert oder wenigstens minimiert werden kann.

Das Schiebetürsystem weist vorzugsweise einen Haltearm auf, der mit der Schiebetür und dem Führungselement verbunden ist. Bei Schiebetürsystemen, die Führungsschienen aufweisen, die an ihren nach vorne weisenden Enden zum Fahrzeuginneren hin gebogen sind, kann die jeweilige Verbindung auch schwenkbar ausgeführt sein, damit die zusätzliche Schwenkung der Tür über das Schiebetürsystem kompensierbar ist. Weiterhin ist die Führungsschiene in dem erfindungsgemäßen Schiebetürsystem kanalförmig ausgebildet und weist eine sich in Längsrichtung der Führungsschiene erstreckende erste Öffnung auf.

Durch diese erste Öffnung erstreckt sich der Haltearm der seinerseits an der Schiebetür befestigt ist. Der Haltearm ist innerhalb der Führungsschiene mit dem Führungselement verbunden, welches wenigstens eine Rolle aufweist, die um eine Achse drehbar an der kanalförmigen Führungsschiene angeordnet ist. Das Führungselement kann auch mehrere Rollen aufweisen, die eine Abstützung in mehrere verschiedene Richtungen ermöglichen und damit ein stabilere Führung gewährleisten. Insbesondere können Haltearm und Führungselement auch einteilig ausgeführt sein, so dass zusätzliche Verbindungselemente eingespart werden können.

Das erfindungsgemäße Schiebetürsystem weist in der Führungsschiene eine zweite Öffnung entlang des Verfahrweges des Führungselementes auf, wobei sich durch diese zweite Öffnung ein Verbindungselement erstreckt, das mit dem Führungselement und/oder dem Haltearm verbunden ist.

Gemäß einer vorteilhaften Ausgestaltung kann der Haltearm auch mehrteilig ausgeführt sein, vorzugsweise mit einem Schwenkelement, so dass Führungselement und Haltearm sowie Haltearm und Schiebetür fest und insbesondere nicht schwenkbar miteinander verbunden sind, die Schwenkbarkeit aber über ein Schwenkelement zwischen den Haltearmelementen gewährleistbar ist.

Gemäß einer weiteren vorteilhaften Ausprägung der Erfindung weist diese zweite Öffnung eine Dichtung auf.

Gemäß einer weiteren vorteilhaften Ausprägung der Erfindung sind Verbindungselement und Haltearm außerhalb der Führungsschiene miteinander verbunden.

Das Verbindungselement ist einerseits mit dem Anschlusselement der Energieführungseinheit und auf der anderen Seite mit dem Führungselement, welches in der Führungsschiene verfahrbar ist und/oder mit dem Haltarm verbunden. Gemäß einer vorteilhaften Ausgestaltung der Erfindung können diese Verbindungen jeweils schwenkbar ausgeführt sein.

Gemäß einer weiteren vorteilhaften Ausprägung der Erfindung ist das Anschlusselement mit dem Führungselement und/oder mit dem Haltearm verbunden, wobei jede dieser Verbindungen schwenkbar ausgeführt sein kann.

Die einzelnen Komponenten des erfindungsgemäßen Schiebetürsystems sind so gestaltet, dass die elektrischen Einrichtungen der Schiebetür mit der mindestens einen Energieführungsleitung verbunden sind, die aus der Energieführungseinheit austritt und über das Anschlusselement, gegebenenfalls über das Verbindungselement und/oder das Führungselement und abschließend über den Haltearm mit der Schiebetür verbunden ist.

Das erfindungsgemäße Schiebetürsystem ist **dadurch gekennzeichnet, dass** die Energieführungseinheit in einer Führungsvorrichtung angeordnet ist, wobei die Führungsvorrichtung ebenfalls als langgestrecktes Führungsgehäuse ausgebildet ist, in der zwei im Wesentlichen gegenüberliegende Längsseiten jeweils nach außen weisende Seiten der Trums der Energieführungseinheit führen. Dabei können an den Längsseiten des Gehäuses auch Führungen vorgesehen werden, die ein reibungsarmes und weitgehend verschleißfreies Abgleiten der Energieführungskette gewährleisten.

Die Führungsvorrichtung kann als Verbund mit der Führungsschiene oder der Fahrzeugkarosse ausgeführt sein, so dass zusätzliche Verbindungselemente eingespart werden können. Gemäß einer weiteren vorteilhaften Ausgestaltung der Erfindung kann die Führungsvorrichtung auch durch die Außenwand der Karosse einerseits und die benachbart angeordnete Führungsschiene andererseits gebildet werden, so dass diese zusätzliche Komponente eingespart wird.

Eine vorteilhafte Ausprägung des erfindungsgemäßen Schiebetürsystems ist dadurch gekennzeichnet, dass die Führungsvorrichtung lösbar mit der Führungsschiene verbunden ist. Durch eine solche Ausgestaltung der Führungsvorrichtung ergeben sich für den Konstrukteur mehr Freiheitsgrade bei der Gestaltung der einzelnen Komponenten des Schiebetürsystems.

Eine weitere vorteilhafte Ausgestaltung des erfmdungsgemäßen Schiebetürsystems ist **dadurch gekennzeichnet, dass** die Führungsvorrichtung beabstandet zur Führungsschiene angeordnet ist. Somit können insbesondere räumliche Einschränkungen flexibler umgangen werden.

Gemäß einer weiteren vorteilhaften Ausgestaltung kann das erfindungsgemäße Schiebetürsystem komplett vormontiert und als solche Einheit gegebenenfalls zusammen mit der Schiebetür am Fahrzeug montiert bzw. demontiert werden. Dies ist insbesondere unter dem Gesichtspunkt der Großserienfertigung bei Kraftfahrzeugen ein wesentlicher konstruktiver Vorteil.

Die Führungsvorrichtung weist in Verfahrrichtung des Führungselementes einen Spalt auf, durch den hindurch sich das Verbindungselement erstreckt. Vorzugsweise weist auch dieser Spalt eine Dichtung auf, die insbesondere die Energieführungseinheit vor eindringenden Schmutz- und Staubelementen oder Feuchtigkeit schützt und somit den Verschleiß der Energieführungskette minimiert.

Gemäß einer besonders vorteilhaften Ausprägung der erfindungsgemäßen Schiebetürsystems deckt die Führungsschiene den Spalt der Führungsvorrichtung komplett zum Fahrzeugäußeren ab so dass die Energieführungskette und die darin geführten elektrischen Leitungen vom Fahrzeugäußeren her nicht zugänglich sind. So wird einerseits ein Schmutzeintrag in die Führungsvorrichtung der Energieführungskette minimiert und andererseits eine Manipulation der elektrischen Leitung durch unbefugten Eingriff von außen unmöglich gemacht.

Weitere Vorteile und Einzelheiten der Erfindung werden anhand der in der Zeichnung dargestellten Ausführungsbeispiele erläutert ohne dass der Gegenstand der Erfindung auf diese konkreten Ausführungsbeispiele beschränkt wird.

Es zeigen:
- Fig. 1: schematisch ein Fahrzeug mit einem erfindungsgemäßen Schiebetürsystem,
- Fig. 2: schematisch eine perspektivische Ansicht des fahrzeugseitigen Teiles eines allg. bekannten Schiebetürsystems,
- Fig. 3: schematisch eine perspektivische Ansicht der aufgeschnittenen Führungsschiene, des erfindungsgemäßen Schiebetürsystems.
- Fig. 4: schematisch eine perspektivische Ansicht der Karossenseitigen Ausführung des erfindungsgemäßen Schiebetürsystems,
- Fig. 5: schematisch eine perspektivische Ansicht der Führungsschiene und der Energieführungseinheit und
- Fig. 6: schematisch und im Schnitt eine Ansicht der Führungsschiene mit einem Kanal und einer Energieführungseinheit.

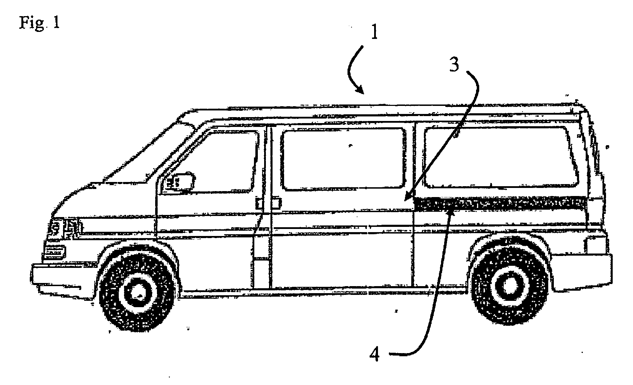

Fig. 1 zeigt schematisch ein Fahrzeug mit einem erfindungsgemäßen Schiebetürsystem, wobei hier die Ausführungsform mit mittig angeordneter Führungsschiene 4 gezeigt ist, bei der der Haltearm 6 am hinteren Teil der Schiebetür 3 angeschlagen wird. Die Führungsschiene 4 ist dabei bei geschlossener Schiebetür 3 über nahezu ihrer gesamten Länge sichtbar. Der nach innen gebogene Bereich der Führungsschiene 4 wird hier durch die geschlossene Schiebetür 3 wenigstens teilweise abgedeckt.

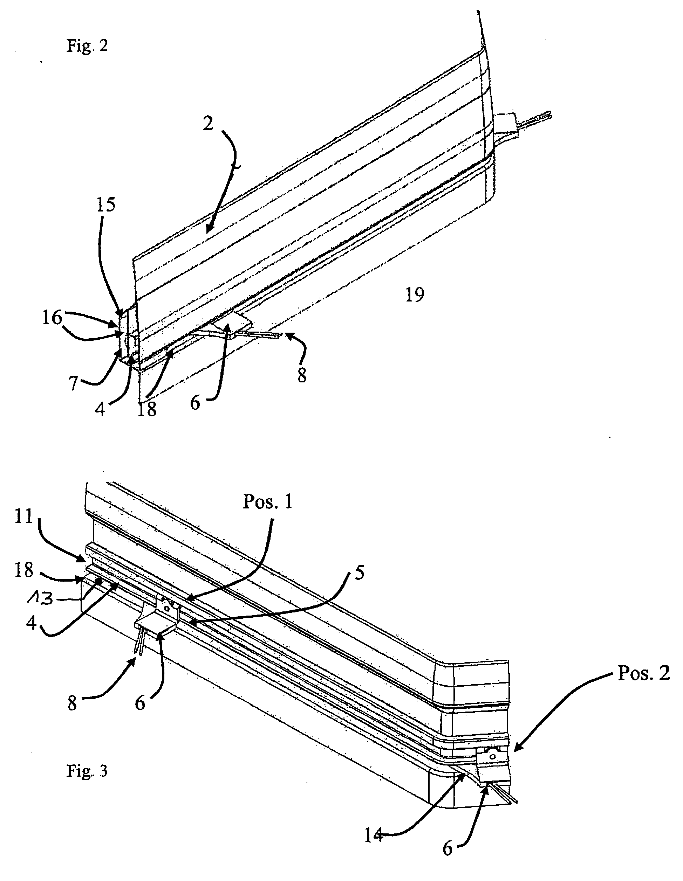

Fig. 2 zeigt schematisch eine perspektivische Ansicht eines Schiebetürsystems an bzw. innerhalb der Fahrzeugkarosserie 2. Die Führungsschiene 4 wird teilweise von der Fahrzeugkarosserie 2 abgedeckt, wobei der Haltearm 6 sich durch den Spalt in der Karossenaußenwand hin zur nicht dargestellten Schiebetür 3 erstreckt. Sichtbar sind die über den Haltearm 6 zur Schiebetür 3 geführten Energieführungsleitungen 8. Der Haltearm 6 ist dabei entweder fest mit der Schiebetür 3 verbunden oder weist ein nicht dargestelltes Schwenkelement auf, über das er mit einem zweiten Teil des Haltearms 6 mit der Schiebetür 3 so verbunden ist, das die Bewegung der Schiebetür 3 entlang der in der Nähe des Türausschnitts nach innen gebogenen Führungsschiene 4 kompensiert wird. Die Leitungen 8 sind gemäß einer vorteilhaften Ausgestaltung der Erfindung durch den Haltearm 6 eingefasst und somit von außen nicht zugänglich. Die Energieführungseinheit 7 ist in der Führungsvorrichtung 15 angeordnet und wird hier von den einander gegenüberliegenden Längsseiten 16 geführt. Die Längsseiten 16 können zusätzliche Elemente aufweisen, die die Reibung minimieren können, die bei dynamischer Bewegung der Energieführungseinheit 7 durch Betätigen der Schiebetür 3 auftritt. Somit können eine Abnutzung der Energieführungseinheit 7 und eine Korrosion der Längsseiten 16 infolge von Abrieb vermieden werden. Die Verbindung zwischen dem Haltearm 6 und der Energieführungseinheit 7 kann so ausgestaltet sein, dass diese oberhalb oder unterhalb der Führungsschiene 4 liegt. Es besteht auch die Möglichkeit, dass die Führungsschiene zweiteilig unter Ausbildung eines Schlitzes ausgebildet ist, so dass sich die Verbindung zwischen dem Haltearm und der Energieführungseinheit durch den Schlitz der Führungsschiene hindurch erstreckt.

Fig. 2 zeigt weiterhin die Führungsschiene 4 mit benachbart angeordneter Führungsvorrichtung 15, in der die Energieführungseinheit 7 aufgenommen ist. In der gezeigten Ausführung des Schiebetürsystems weist die Führungsschiene keine zweite Öffnung 13 auf. Die Energieführungsleitungen 8 werden aus der Energieführungseinheit 7 heraus über ein Anschlusselement 10 und ein Verbindungselement 14 durch den Spalt 18 zwischen Führungsschiene 4 und Führungsvorrichtung 15 hindurch zum Haltearm 6 geführt. Die Führungsschiene 4 deckt hierbei die Führungsvorrichtung 15 nach außen hin ab.

In der Fig. 3 ist die Karossenaußenwand der Fahrzeugkarosserie 2 weggeschnitten und die Führungsschiene 4 offengelegt. Schematisch zeigt Fig. 2 eine perspektivische Ansicht des erfindungsgemäßen Schiebetürsystems 1, wobei der Haltearm 6 hier die Funktion des Führungselementes 5 in sich aufnimmt. Der Haltearm 6 ist in zwei Positionen gezeigt, bei geöffneter (Pos. 1) und bei geschlossener Tür (Pos. 2). Der Haltearm 6 erstreckt sich über die erste Öffnung 11 in die Führungsschiene 4 und stützt sich dort über Rollen 12 ab, mittels derer er entlang der Führungsschiene 4 verfahren kann.

Die Führungsschiene 4 liegt in der gezeigten erfindungsgemäßen Ausführungsform außen vor der Führungsvorrichtung 15 und bildet mit dieser den Spalt 18, durch den hindurch sich das Verbindungselement 14 erstreckt.

Erfindungsgemäß weist die Führungsschiene 4 eine zweite Öffnung 13 auf, die z.B. gegenüberliegend der in Fig. 2 dargestellten ersten Öffnung 11 angeordnet ist. Dabei liegt die Führungsvorrichtung 15 angrenzend oder beabstandet hinter der Führungsschiene 4 derart, dass die Führungsvorrichtung 15 vollständig von der Führungsschiene 4 nach außen abgedeckt ist. In der Führungsvorrichtung 15 ist die Energieführungseinheit 7 angeordnet und die darin geführten Energieführungsleitungen 8 erstrecken sich über das Anschlusselement 10, das Verbindungselement 14 zum Führungselement 5 und dem Haltearm 6 und über diesen zur Schiebetür 3, wobei der Haltearm 6 erfindungsgemäß die Funktion des Führungselementes 5 aufweisen kann. Das Verbindungselement 14 erstreckt sich durch Spalt 18 und die zweite Öffnung 13 und verbindet Anschlusselement 10 und Führungselement 5 oder Anschlusselement 10 und Haltearm 6.

Die Führungsschiene 4 weist erfindungsgemäß eine zweite Öffnung 13 auf, die beliebig innerhalb der Führungsschiene 4 angeordnet ist, wobei die Führungsvorrichtung 15 beliebig zur Führungsschiene 4 angeordnet ist, so dass eine labyrinthische Verbindung zwischen Energieführungseinheit 7 und Führungselement 5 gestaltet ist, wodurch eine Zugänglichkeit von außerhalb des Fahrzeugs zu der Energieführungseinheit 7 wesentlich erschwert wird und auch ein Schmutz- oder Feuchtigkeitseintrag in den Bewegungsbereich der Energieführungseinheit 7 minimiert wird. Das Verbindungselement 14 kann hierbei beliebig gestaltet sein, z.B. stabförmig oder bügelförmig, und ist fest oder schwenkbar mit Anschlusselement 10 und Führungselement 5 oder Haltearm 6 verbunden.

In den genannten Ausführungsformen des erfindungsgemäßen Schiebetürsystems weist in einer besonders vorteilhaften Gestaltung die zweite Öffnung 13 und/oder der Spalt 18 eine Dichtung auf, die Schmutz- und Feuchtigkeitseintrag in den Bewegungsbereich der Energieführungseinheit 7 zusätzlich verringern kann.

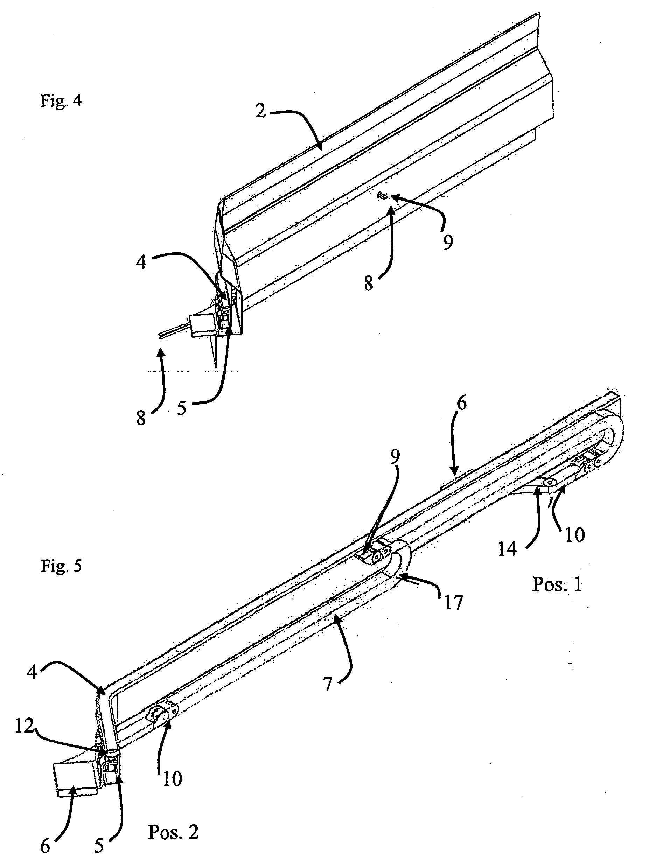

Fig. 4 zeigt schematisch in einer perspektivischen Ansicht die dem Fahrzeug zugewandte Seite des erfindungsgemäßen Schiebetürsystems, wobei das die Rückseite des Schiebetürsystems 1 bildende Wandelement bereits Bestandteil der Fahrzeugkarosserie 2 sein kann. Die Energieführungsleitung 8 ist an dem ortsfesten Anschluss 9 mit der Fahrzeugelektrik verbunden. Der Haltearm 6 ist in der Stellung bei geschlossener Schiebetür 3 gezeigt.

In Fig. 5 ist die Lage der Energieführungseinheit 7 zur Führungsschiene 4 schematisch in einer perspektivischen Darstellung veranschaulicht. Die Energieführungseinheit 7 erstreckt sich von einem ortsfesten Anschluss 9 zu einem Anschlusselement 10 und ist hier in zwei Positionen dargestellt, bei geöffneter (Pos. 1) und geschlossener (Pos. 2) Schiebetür 3. Das Verbindungselement 14 ist schwenkbar mit dem Anschlusselement 10 verbunden und kompensiert so die Bewegung des Haltearms 6 entlang der im vorderen Bereich nach innen gebogenen Führungsschiene 4. Dadurch ist eine weitere Umlenkung der Energieführungseinheit 7 nicht erforderlich.

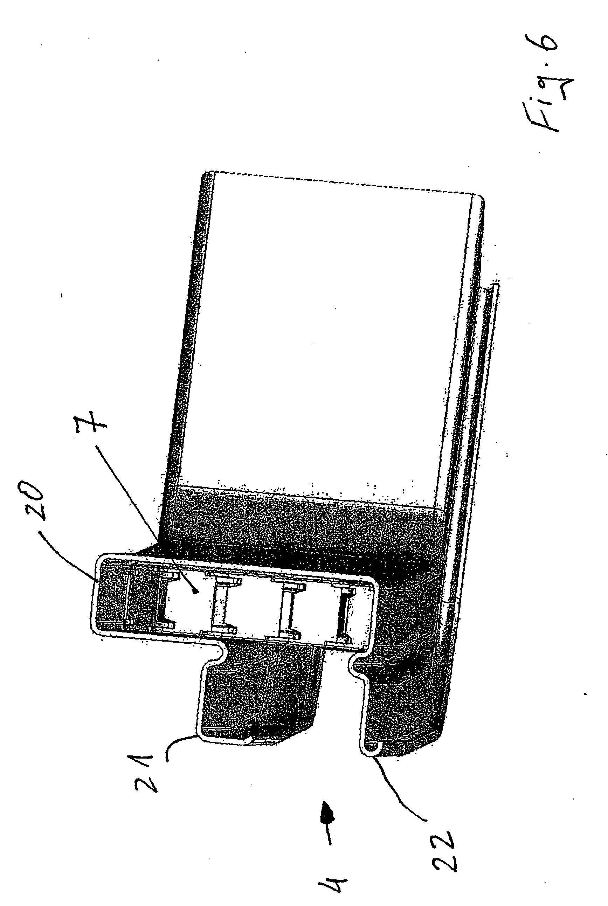

Figur 6 zeigt eine Anordnung der Energiefiihrungseinheit und der Führungsschiene im Querschnitt. Die Energieführungseinheit 7 ist in einem Kanal 20 geführt. Der Kanal 20 und die Führungsschiene bilden vorzugsweise eine Baueinheit. Die Führungsschiene ist gebildet durch ein Oberteil 21 und ein Unterteil 22. Der Kanal 20 und die Führungsschiene 4 können einstückig ausgebildet sein. Dies ist nicht zwingend notwendig. Es besteht auch die Möglichkeit, dass diese zweiteilig ausgebildet sind und mittels nicht dargestellter Verbindungsmittel miteinander verbunden sind.

Die Führungsschiene und die Energieführungseinheit umfassend eine Energieführungskette und eine Führung für die Energieführungskette können eine Baueinheit bilden, die bereits vormontiert ist. Hierbei sind auch die Leitungen, Schläuche oder dergleichen, in der Energieführungskette verlegt. Am Montageort bedarf es lediglich der Verbindung der Baueinheit mit der Karosserie.

Es besteht auch die Möglichkeit, dass die Energieführungseinheit in einem Führungskanal geführt wird. Der Führungskanal ist vorzugsweise so ausgestaltet, dass dieser zum einen zur Führung der Energieführungseinheit und zum anderen zum Schutz der Energieführungseinheit dient. Der Führungskanal kann auch so ausgestaltet sein, dass die Geräuschbildung während der Bewegung der Energieführungseinheit zumindest vermindert wird. Vorzugsweise ist der Kanal aus Kunststoff ausgebildet. Dieser kann gegebenenfalls Laufflächen aufweisen, die eine erhöhte Gleiteigenschaft aufweisen, so dass die Reibungskräfte zwischen der Energieführungseinheit und dem Kanal vermindert werden. Die Energieführungseinheit kann so angeordnet sein, dass die Trumme in einer horizontalen Ebene übereinander oder nebeneinander verlaufen.

Der Festpunktanschluss der Energieführungseinheit ist vorzugsweise im Inneren des Kanals fixiert.

### Bezugszeichenliste

- 1: Schiebetürsystem
- 2: Fahrzeugkarosserie
- 3: Schiebetür
- 4: Führungsschiene
- 5: Führungselement
- 6: Haltearm
- 7: Energieführungseinheit
- 8: Energieführungsleitung
- 9: ortsfester Anschluss
- 10: Anschlusselement
- 11: Erste Öffnung
- 12: Rolle
- 13: Zweite Öffnung
- 14: Verbindungselement
- 15: Führungsvorrichtung
- 16: Längsseite
- 17: Trum
- 18: Spalt
- 19: Fahrzeugumgebung
- 20: Kanal
- 21: Oberteil
- 22: Unterteil

## Patentansprüche

1. Schiebetürsystem (1) für ein Fahrzeug mit einer eine Türöffnung aufweisenden Fahrzeugkarosserie (2) umfassend eine Schiebetür (3) mit einer an oder in der Fahrzeugkarosserie (2) in der Nähe der Türöffnung anbringbaren Führungsschiene (4), wenigstens ein längs der Führungsschiene (4) verfahrbares Führungselement (5), das über einen Haltearm (6) mit der Schiebetür (3) verbunden ist, eine Energieführungseinheit (7), die aus gelenkig miteinander verbundenen Gliedern zur Aufnahme und Führung von wenigstens einer Leitung (8) gebildet ist, die sich von einem ortsfesten Anschluss (9) an der Fahrzeugkarosserie (2) zu einem Anschlusselement (10) erstreckt, wobei die Energieführungseinheit (7) in Längsrichtung der Führungsschiene (4) bewegbar ist und die Führungsschiene (4) die Energieführungseinheit (7) nach außen hin wenigstens teilweise überlappt, wobei die Führungsschiene (4) kanalförmig mit einer sich in Längsrichtung der Führungsschiene (4) erstreckenden ersten Öffnung (11) ausgebildet ist durch die sich der Haltearm (6) erstreckt und das Führungselement (5) mindestens eine Rolle (12) aufweist, die um eine Achse drehbar in der kanalförmigen Führungsschiene (4) angeordnet und am Haltearm (6) gelagert ist, **dadurch gekennzeichnet, dass** die Führungsschiene (4) entlang des Verfahrweges des Führungselementes (5) eine zweite Öffnung (13) aufweist, durch die hindurch sich ein Verbindungselement (14) erstreckt.

2. Schiebetürsystem nach Anspruch 1, **dadurch gekennzeichnet, dass** der Haltearm (6) schwenkbar mit der Schiebetür (3) und/oder dem Führungselement (5) verbunden ist.

3. Schiebetürsystem nach Anspruch 1, **dadurch gekennzeichnet, dass** die zweite Öffnung (13) eine Dichtung aufweist.

4. Schiebetürsystem nach einem der Ansprüche 1 bis 3, **dadurch gekennzeichnet, dass** das Anschlusselement (10) mit dem Führungselement (5) und/oder dem Haltearm (6) verbunden ist.

5. Schiebetürsystem nach einem der Ansprüche 1 bis 3, **dadurch gekennzeichnet, dass** das Anschlusselement (10) über das Verbindungselement (14) mit dem Führungselement (5) und/oder dem Haltearm (6) verbunden ist.

6. Schiebetürsystem nach einem der Ansprüche 4 und 5, **dadurch gekennzeichnet, dass** wenigstens eine der Verbindungen schwenkbar ausgeführt ist.

7. Schiebetürsystem nach einem der Ansprüche 1 bis 6, **dadurch gekennzeichnet, dass** die mindestens eine Energieführungsleitung (8) aus einem Ende der Energieführungseinheit (7) austritt und über Anschlusselement (10), gegebenenfalls über Verbindungselement (14) und/oder Führungselement (5), und Haltearm (6) der Schiebetür (3) zugeführt wird.

8. Schiebetürsystem nach einem der Ansprüche 1 bis 7, **dadurch gekennzeichnet, dass** die Energieführungseinheit (7) in einer Führungsvorrichtung (15) angeordnet ist.

9. Schiebetürsystem nach Anspruch 8, **dadurch gekennzeichnet, dass** die Führungsvorrichtung (15) als langgestrecktes Führungsgehäuse ausgebildet ist, in der zwei gegenüberliegende Längsseiten (16) jeweils nach außen weisende Seiten der Trums (17) der Energieführungseinheit (7) führen.

10. Schiebetürsystem nach Anspruch 9, **dadurch gekennzeichnet, dass** die Führungsvorrichtung (15) lösbar mit der Führungsschiene (4) verbunden ist.

11. Schiebetürsystem nach Anspruch 9, **dadurch gekennzeichnet, dass** die Führungsvorrichtung (15) beabstandet zur Führungsschiene (4) angeordnet ist.

12. Schiebetürsystem nach einem der Ansprüche 8 bis 11, **dadurch gekennzeichnet, dass** die Führungsvorrichtung (15) in Verfahrrichtung des Führungselementes (5) einen Spalt (18) aufweist, durch den hindurch sich das Verbindungselement (14) erstreckt.

13. Schiebetürsystem nach Anspruch 12, **dadurch gekennzeichnet, dass** der Spalt (18) eine Dichtung aufweist.

14. Schiebetürsystem nach einem der Ansprüche 1 bis 13, **dadurch gekennzeichnet, dass** die Führungsschiene (4) den Spalt (18) der Führungsvorrichtung (15) komplett zum Fahrzeugäußeren (19) hin abdeckt.

## Claims

1. Sliding door system (1) for a vehicle with a vehicle body (2) having a door opening, said sliding door system comprising a sliding door (3) with a guide rail (4) which can be fitted on or in the vehicle body (2) in the vicinity of the door opening, at least one guide element (5) which is movable along the guide rail (4) and is connected to the sliding door (3) via a retaining arm (6), a power-conducting unit (7) which is formed from links which are connected to one another in an articulated manner and are intended for receiving and guiding at least one line (8) which extends from a positionally fixed terminal (9) on the vehicle body (2) to a terminal element (10), wherein the power-conducting unit (7) is movable in the longitudinal direction of the guide rail (4), and the guide rail (4) at least partially overlaps the power-conducting unit (7) to the outside, wherein the guide rail (4) is of channel-shaped design with a first opening (11) which extends in the longitudinal direction of the guide rail (4) and through which the retaining arm (6) extends, and the guide element (5) has at least one roller (12) which is arranged in the channel-shaped guide rail (4) in a manner such that it can rotate about an axis and is mounted on the retaining arm (6), **characterized in that** the guide rail (4) has, along the path of movement of the guide element (5), a second opening (13) through which a connecting element (14) extends.

2. Sliding door system according to Claim 1, **characterized in that** the retaining arm (6) is connected pivotably to the sliding door (3) and/or to the guide element (5).

3. Sliding door system according to Claim 1, **characterized in that** the second opening (13) has a seal.

4. Sliding door system according to one of Claims 1 to 3, **characterized in that** the terminal element (10) is connected to the guide element (5) and/or to the retaining arm (6).

5. Sliding door system according to one of Claims 1 to 3, **characterized in that** the terminal element (10) is connected to the guide element (5) and/or to the retaining arm (6) via the connecting element (14).

6. Sliding door system according to either of Claims 4 and 5, **characterized in that** at least one of the connections is designed such that it is pivotable.

7. Sliding door system according to one of Claims 1 to 6, **characterized in that** the at least one power-conducting line (8) emerges from one end of the power-conducting unit (7) and is supplied via the terminal element (10), and, if appropriate, via the connecting element (14) and/or guide element (5), and the retaining arm (6) to the sliding door (3).

8. Sliding door system according to one of Claims 1 to 7, **characterized in that** the power-conducting unit (7) is arranged in a guide device (15).

9. Sliding door system according to Claim 8, **characterized in that** the guide device (15) is designed as an elongate guide housing in which two opposite longitudinal sides (16) each guide outwardly facing sides of the strands (17) of the power-conducting unit (7).

10. Sliding door system according to Claim 9, **characterized in that** the guide device (15) is connected releasably to the guide rail (4).

11. Sliding door system according to Claim 9, **characterized in that** the guide device (15) is arranged at a distance from the guide rail (4).

12. Sliding door system according to one of Claims 8 to 11, **characterized in that**, in the direction of movement of the guide element (5), the guide device (15) has a gap (18) through which the connecting element (14) extends.

13. Sliding door system according to Claim 12, **characterized in that** the gap (18) has a seal.

14. Sliding door system according to one of Claims 1 to 13, **characterized in that** the guide rail (4) completely covers the gap (18) of the guide device (15) toward the vehicle exterior (19).

## Revendications

1. Système de porte coulissante (1) pour un véhicule comprenant une carrosserie de véhicule (2) présentant une ouverture de porte, comprenant une porte coulissante (3) avec un rail de guidage (4) pouvant être monté sur ou dans la carrosserie du véhicule (2) à proximité de l'ouverture de porte, au moins un élément de guidage (5) déplaçable le long du rail de guidage (4), qui est connecté par le biais d'un bras de retenue (6) à la porte coulissante (3), une unité de guidage d'énergie (7) qui est formée d'organes connectés de manière articulée les uns aux autres pour recevoir et guider au moins une conduite (8) qui s'étend depuis un raccord fixe (9) sur la carrosserie du véhicule (2) jusqu'à un élément de raccord (10), l'unité de guidage d'énergie (7) pouvant être déplacée dans la direction longitudinale du rail de guidage (4) et le rail de guidage (4) chevauchant au moins en partie vers l'extérieur l'unité de guidage d'énergie (7), le rail de guidage (4) étant réalisé sous forme de canal avec une première ouverture (11) s'étendant dans la direction longitudinale du rail de guidage (4), à travers laquelle s'étend le bras de retenue (6), et l'élément de guidage (5) présentant au moins un rouleau (12), qui est disposé de manière rotative autour d'un axe dans le rail de guidage (4) en forme de canal et qui est monté sur le bras de retenue (6), **caractérisé en ce que** le rail de guidage (4) présente le long de la course de déplacement de l'élément de guidage (5) une deuxième ouverture (13) à travers laquelle s'étend un élément de connexion (14).

2. Système de porte coulissante selon la revendication 1, **caractérisé en ce que** le bras de retenue (6) est connecté de manière pivotante à la porte coulissante (3) et/ou à l'élément de guidage (5).

3. Système de porte coulissante selon la revendication 1, **caractérisé en ce que** la deuxième ouverture (13) présente un joint d'étanchéité.

4. Système de porte coulissante selon l'une quelconque des revendications 1 à 3, **caractérisé en ce que** l'élément de raccord (10) est connecté à l'élément de guidage (5) et/ou au bras de retenue (6).

5. Système de porte coulissante selon l'une quelconque des revendications 1 à 3, **caractérisé en ce que** l'élément de raccord (10) est connecté par le biais de l'élément de connexion (14) à l'élément de guidage (5) et/ou au bras de retenue (6).

6. Système de porte coulissante selon l'une quelconque des revendications 4 et 5, **caractérisé en ce qu'**au moins l'une des connexions est réalisée de manière pivotante.

7. Système de porte coulissante selon l'une quelconque des revendications 1 à 6, **caractérisé en ce que** l'au moins une conduite de guidage d'énergie (8) sort d'une extrémité de l'unité de guidage d'énergie (7) et est acheminée par le biais de l'élément de raccord (10), éventuellement par le biais de l'élément de connexion (14) et/ou de l'élément de guidage (5), et du bras de retenue (6), à la porte coulissante (3).

8. Système de porte coulissante selon l'une quelconque des revendications 1 à 7, **caractérisé en ce que** l'unité de guidage d'énergie (7) est disposée dans un dispositif de guidage (15).

9. Système de porte coulissante selon la revendication 8, **caractérisé en ce que** le dispositif de guidage (15) est réalisé sous forme de boîtier de guidage allongé, dans lequel deux côtés longitudinaux (16) opposés guident à chaque fois des côtés tournés vers l'extérieur du tronçon (17) de l'unité de guidage d'énergie (7).

10. Système de porte coulissante selon la revendication 9, **caractérisé en ce que** le dispositif de guidage (15) est connecté de manière détachable au rail de guidage (4).

11. Système de porte coulissante selon la revendication 9, **caractérisé en ce que** le dispositif de guidage (15) est disposé de manière espacée du rail de guidage (4).

12. Système de porte coulissante selon l'une quelconque des revendications 8 à 11, **caractérisé en ce que** le dispositif de guidage (15) présente, dans la direction de déplacement de l'élément de guidage (5) une fente (18) à travers laquelle s'étend l'élément de connexion (14).

13. Système de porte coulissante selon la revendication 12, **caractérisé en ce que** la fente (18) présente un joint d'étanchéité.

14. Système de porte coulissante selon l'une quelconque des revendications 1 à 13, **caractérisé en ce que** le rail de guidage (4) recouvre la fente (18) du dispositif de guidage (15) complètement vers l'extérieur du véhicule (19).
